(19) Europäisches Patentamt

European Patent Office

Office européen des brevets

(11) Veröffentlichungsnummer: **0 466 003 A2**

## (12) EUROPÄISCHE PATENTANMELDUNG

(21) Anmeldenummer: **91110980.9**

(22) Anmeldetag: **03.07.91**

(51) Int. Cl.5: **G02B 7/18**, G02B 23/16

(30) Priorität: **10.07.90 DE 4021647**

(43) Veröffentlichungstag der Anmeldung:
**15.01.92 Patentblatt 92/03**

(84) Benannte Vertragsstaaten:
**DE FR IT**

(71) Anmelder: **Firma Carl Zeiss**

**W-7920 Heidenheim (Brenz)(DE)**

(72) Erfinder: **Meier, Hans-J.**
**Langertstrasse 58**
**W-7080 Aalen(DE)**

(54) Spiegellagerung für den Primärspiegel eines Teleskops.

(57) Die vorliegende Erfindung löst das Problem, auch größere Kraftkomponenten in der azimutalen Achse aufzunehmen, sowie Momente um die Spiegelachse am Ort ihrer Entstehung zu vernichten. Obwohl derartige Kräfte statisch an erdgebundenen Teleskopen kaum auftreten können, kann eine schnelle Drehung um mehrere Achsen solche Momente erzeugen, insbesondere wenn der Spiegel in einer Montierung mit drei orthogonalen Antriebsachsen betrieben wird.

Die erfinderische Lösung besteht aus einer hydraulischen lateralen Lagerung, welche an mehreren Punkten auf der Spiegelrückseite angreift. Diese Lagerung ist der Wirkungsweise einer V-Lagerung nachempfunden. Die laterale V-Lagerung kann alle lateralen Kräfte innerhalb des V-Winkels aufnehmen.

Fig. 2

EP 0 466 003 A2

Die Erfindung betrifft eine Spiegellagerung für den Primärspiegel eines Teleskops mit einer Dreipunktlagerung durch ein axiales Unterstützungssystem an Unterstützungspunkten in einem Raster an der Spiegelrückseite, welche eine paraxiale Montierung erlaubt.

Spiegellagerungen sind äußerst kritisch, da sie leicht gewisse lagerungsbedingte Deformationen auf der spiegelnden Fläche hervorrufen können. Ein derart deformierter Spiegel hat aber eine stark verminderte Gebrauchsqualität und liefert bei seiner Verwendung in einem Teleskop nicht die erforderliche Bildqualität.

Bei der Spiegellagerung gibt es insgesamt sechs Bewegungsfreiheitsgrade. Man unterscheidet deshalb die axiale, die laterale und die rotationshemmende zwangsfreie Lagerung.

Die axiale Spiegellagerung legt drei der sechs Bewegungsfreiheitsgrade eines Spiegels fest. Hat ein Spiegel eine axiale Spiegellagerung, so kann er sich lediglich noch auf einer Ebene bewegen (zwei weitere der insgesamt sechs Freiheitsgrade) oder sich um sich selbst drehen (der letzte der sechs Freiheitsgrade).

Die durch axiale Spiegellagerung erzeugte Ebene erhält man durch eine sogenannte Dreipunktlagerung. Würde man außerdem versuchen, mit der axialen Spiegellagerung auch die restlichen Bewegungsgrade abzudecken, so ließe sich eine Übertragung von Spannungen, welche unerwünschte Deformationen auf der Spiegeloberfläche hervorrufen, auf dem Spiegel nicht vermeiden. Die axiale Spiegellagerung greift normalerweise an mehreren Punkten an der Spiegelrückseite an und kann z.B. aus hydraulischen Elementen oder Hebelsystemen bestehen. Die Verbindung zwischen der Lagerung und dem Spiegel erfolgt dabei über möglichst reibungsfreie Gelenke (z.B. Kugellager, usw.).

Aufgrund der vorab geschilderten Bedingungen besitzt eine Spiegellagerung zusätzlich zur axialen Spiegellagerung noch mindestens eine weitere Spiegellagerung. Diese weitere Spiegellagerung greift bei dem bekannten Stand der Technik entweder an der Außenseite des Spiegels an oder in seiner Zentralbohrung.

Das gebräuchlichste Verfahren zur Realisierung einer derartigen, zusätzlich zur axialen Spiegellagerung vorhandenen Spiegellagerung, ist das Push/Pull-System am äußeren Spiegelrand sowie seine verschiedenen Variationen. Dieses Push/Pull-System eignet sich für eine allgemeine räumliche Lagefixierung eines Spiegels, wie dies für Primärspiegel in Teleskopen mit paraxialer Montierung erforderlich ist. Da bei diesem System die Lagerungskräfte nur seitlich an dem Spiegelkörper angreifen, entstehen in dem Spiegel konstante Spannungen, welche seine Qualität verschlechtern.

Eine dazu bekannte Alternative ist die Kombination eines axialen und eines radialen Stützsystems mit einem Zentrierrohr.

Das axiale und das radiale Stützsystem befindet sich unterhalb des Spiegels, wobei die dabei entstehenden Momente der Radiallagerung durch Gegenmomente so kompensiert werden, als würden die Radialkräfte in der Schwerkraftebene des Spiegels wirken. Die dabei für die axiale und radiale Lagerung verwendeten Verfahren an der Spiegelrückseite können aber nur bei einer azimutalen Montierung verwendet werden. Treten Kraftkomponenten parallel zur Azimutachse auf, so können diese von dem System nicht aufgenommen werden und werden deshalb bei den bekannten Konstruktionen durch ein Zentrierrohr in der Spiegelmitte abgefangen. Dabei erfolgt aber eine Übertragung von Spannungen auf den Spiegel, welche seine optische Abbildungsqualität stark reduziert.

Beide bekannten Lösungen sind nicht geeignet, größere Kraftkomponenten in der azimutalen Achse aufzunehmen, ohne daß Spannungen auf den Spiegel übertragen werden und somit eine starke Reduzierung der optischen Abbildungsqualität erfolgt.

Es ist die Aufgabe der vorliegenden Erfindung, eine Spiegellagerung zu schaffen, welche neben einer axialen Spiegellagerung eine weitere, erfinderische Spiegellagerung besitzt, welche in der Lage ist, die senkrecht zur optischen Achse wirkenden Kräfte gleichmäßig auf den Spiegel zu verteilen.

Das laterale Unterstützungssystem trägt ausschließlich diejenigen Kraftkomponenten, die senkrecht zur optischen Achse wirken, wenn der Spiegel aus einer liegenden in eine stehende Position geschwenkt wird, wie bei einer Drehung um die Elevationsachse in einer azimutalen Montierung.

In einem erdgebundenen Teleskop treten keine Beschleunigungskräfte in Richtung der Elevationsachse (senkrecht zur optischen Achse und zur Schwerkraftrichtung) auf und auch keine Drehmomente um die optische Achse. Solche Momente können aber entstehen, wenn der Spiegel um 3 orthogonale Achsen gedreht werden muß. Kräfte in Richtung der Elevationsachse entstehen durch Beschleunigungen des Teleskopes in einem bewegten System.

Die erfindungsgemäße Spiegellagerung entfaltet ihre besonderen Vorteile somit dann, wenn sich der Spiegel in stabilisierten Systemen auf Fahrzeugen oder Flugkörpern (Flugzeuge, Raketen, ...) befindet.

Die Verhinderung der seitlichen Verlagerung des Spiegels wird erfindungsgemäß durch ein flächendeckendes, punktförmig auf der Rückseite des Spiegels angreifendes Unterstützungssystem erreicht. Diese Lösung hat den Vorteil, daß keine starken Kräfte an der Zentralbohrung oder am Spiegelrand angreifen, sondern diese Kräfte auf die ganze Spiegelrückseite so gleichmäßig wie möglich verteilt werden. Dadurch erhält man eine geringe Deformierung der Spiegeloberfläche, wenn seitliche Kräfte angreifen, und damit insbesondere bei Benutzung des Spiegels in beschleunigten Trägersystemen eine gravierende Verbesserung der optischen Eigenschaften des Spiegels.

In dem man vorteilhafterweise die Elemente des lateralen Unterstützungssystems in zwei Gruppen aufteilt, wobei die Elemente beider Gruppen in einem Winkel zueinander ausgerichtet sind (V-Lagerung), erreicht man, daß laterale Kräfte innerhalb eines V-Winkels aufgenommen werden können. Für kleine Spiegel würde eine einfache V-Typ-Unterstützung ausreichen, um die Kräfte innerhalb eines V-Winkels aufzunehmen. Für größere Primärspiegel müssen die seitlichen Kräfte aber über eine große Anzahl von Angriffspunkten auf der Spiegelrückfläche verteilt werden, damit die resultierenden Deformationen nicht unzulässig große, optische Fehler hervorrufen.

Die Anzahl der Unterstützungspunkte des axialen und des lateralen Unterstützungssystems lassen sich minimieren, wenn das laterale Unterstützungssystem die Unterstützungspunkte des axialen Unterstützungssystems nutzt und diese Punkte somit übereinstimmend sind.

Befestigt man die Elemente des lateralen Unterstützungssystems außerhalb des Gravitationszentrums eines zu einem Unterstützungspunkt gehörenden Teils des Spiegels, so treten laterale Momente auf. Diese lateralen Momente lassen sich vermeiden, in dem man an jedem Unterstützungspunkt Elemente zur Kompensation von lateralen Momenten vorsieht.

Eine sehr gleichmäßige Kraftverteilung erhält man, wenn an jedem Unterstützungspunkt die Elemente des axialen und des lateralen Unterstützungssystems vorhanden sind.

Mit einer Drehsicherung läßt sich die Rotationen des Spiegels um seine optische Achse verhindern. Dabei muß das einzige Konstruktionsziel dieser Drehsicherung darin bestehen, die Rotationen des Spiegels zu verhindern. Alle anderen Bewegungen sollen durch die Drehsicherung nicht behindert werden und völlig frei von der Drehsicherung erfolgen können. Zusammen mit dem axialen und lateralen Unterstützungssystem kann man damit alle Bewegungsfreiheitsgrade des Spiegels festlegen. Dabei ist es vorteilhaft, wenn die Elemente der Drehsicherung an den Unterstützungspunkten des axialen und/oder lateralen Unterstützungssystems angreifen, und aus mehreren Elementen bestehen.

Es ist sehr vorteilhaft, wenn alle Elemente hydraulische Elemente sind, da sich mit diesen Elementen alle Fehlergrößen minimieren lassen. Hierzu ist es notwendig, ein Kompensationssystem vorzusehen, welche die Kompensation des hydrostatischen Effektes ermöglicht.

Es ist vorteilhaft, wenn an jedem Unterstützungspunkt eine Vorrichtung zur aktiven Oberflächenkontrolle vorhanden ist. Diese Vorrichtung dient dem Ausgleich zeitunabhängiger Oberflächenfehler des Spiegels. Die Vorrichtung sollte dabei die Addition oder Subtraktion einer einstellbaren Kraft an jedem Unterstützungspunkt ermöglichen. Vorteilhafterweise benötigt die Vorrichtung nur dann Energie, wenn eine Veränderung der Kraft erfolgen soll (vorteilhaft da keine Erwärmung erfolgt). Die Vorrichtung ist dann in der Lage, langwellige Fehler (Spiegelherstellungsfehler und zeitunabhängige Oberflächenfehler) auf der Spiegeloberfläche oder beschleunigungsbedingte Schärfenfehler rechtzeitig unabhängig vom Betrag aktiv zu korrigieren.

Die Erfindung wird nachstehen in beispielhafterweise anhand der Figuren näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen

| | |
|---|---|
| Figur 1a | eine Verteilung des Unterstützungspunkterasters eines axialen hydraulischen Systems auf der Spiegelunterseite; |
| Figur 1b | den in Figur 1a dargestellten Spiegel in seitlicher Ansicht; |
| Figur 2 | die Orientierung der Elemente des lateralen hydraulischen Systems auf der Spiegelunterseite; |
| Figur 3 | eine hydraulische Drehsicherung; |
| Figur 4 | die hydraulischen Elemente des axialen und des lateralen Unterstützungssystems an einem Unterstützungspunkt; |
| Figur 5 | eine Modellzeichnung zur Erläuterung der Kompensation des hydrostatischen Effektes. |

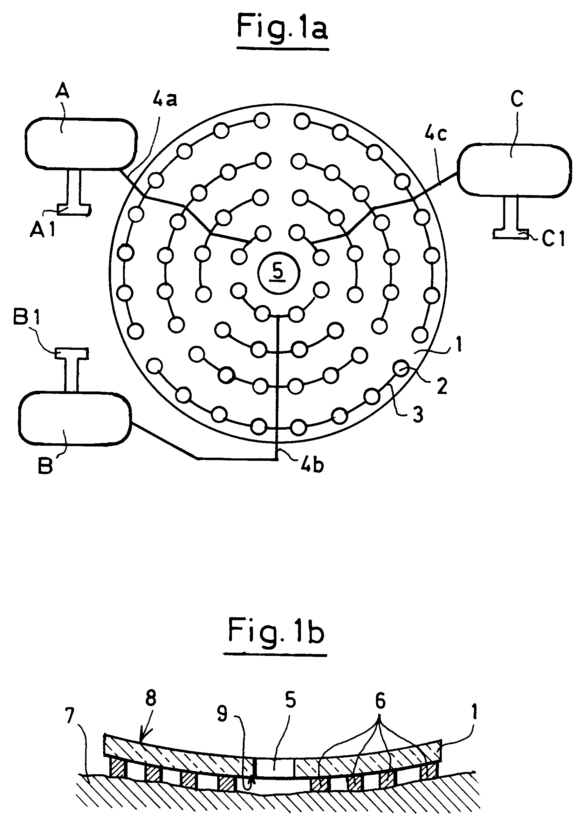

Der in Figur 1a/b in Umrisszeichnungen dargestellte Primärspiegel (1) besitzt nur eine flach gewölbte Spiegeloberfläche (8). Damit der Spiegel (1) möglichst leicht ist, ist er möglichst dünn ausgeführt. Diese Dickenreduzierung des Spiegelkörpers aus Zerodur, einem keramischen Material mit einem Temperaturausdehnungskoeffizienten von nahezu null, geht auf Kosten der Steifheit des Spiegels (1). Die durch die Dickenreduzierung verringerte Steifheit des Spiegels (1) muß durch ein Unterstützungssystem kompensiert werden, welches dem Spiegel (1) in seiner gewünschten und benötigten Form hält, ungeachtet der Deformation der als Auflagekörper (7) dienenden Zellstruktur. Das Unterstützungssystem dient somit der Abkopplung der extremen Deformationsempfindlichen optischen Oberfläche (8) des Spiegels (1) von der tragenden, relativ groben, mechanischen Struktur (7). Dabei muß das an der Spiegelrückseite (9) angebrachte axiale Unterstützungssystem mit seinen hier gezeigten 64 Unterstützungspunkten (2) in einer optimierten Verteilung auf vier Unterstützungsringen so gestaltet sein, daß diese große Anzahl von Unterstützungspunkten (2) als Gesamtheit so wirken, als ob der Spiegel (1) nur auf genau drei Punkten (Dreipunktlagerung) aufliegt. Dann wird der Spiegel (1) von dem Unterstützungssystem genau auf einer Ebene fixiert und durch das Unterstützungssystem wird keine, eine Spiegeldeformation hervorrufende Spannung auf den Spiegel (1) übertragen.

Nur kleine und dicke Spiegel können real auf nur drei Punkten gelagerten werden. Alle größeren Spiegel (1) und insbesondere dünne Spiegel (1) mit einer flachen Wölbung benötigen eine große Anzahl von Unterstützungspunkten (2), welche auf Unterstützungsringen um den Umfang gleichmäßig verteilt werden.

Die Optimierung der Unterstützungsringradien minimiert die Gesamtdeformation des Spiegels als Funktion der Stückradien und der Position der Stückelemente (6) und erzeugt ein möglichst gleichmäßiges Deformationsbild auf der Spiegeloberfläche (8). Dies kann in einem Rechenprogramm erfolgen.

Dazu werden eine Anzahl von Unterstützungspunkten vorgegeben. Diese Vorherbestimmungen definieren das Unterstützungsraster, dessen exakte Positionsbestimmung durch das Rechenprogramm erfolgt. Die Plattenverformungen werden in zwei Schritten berechnet, wobei der erste die optimierten Unterstützungsradien und der zweite die beste Position der Elemente in Umfangsrichtung liefert.

Durch die vielen Unterstützungspunkte (2) werden die Kräfte gleichmäßig verteilt, so daß auch bei von außen wirkenden axialen, linearen Beschleunigungen, insbesondere in Richtung der optischen Achse, der Spiegel (1) relativ unempfindlich hinsichtlich seiner Oberflächendeformation reagiert.

Die zwischen Spiegel (1) und Unterstützungssystem vorhandenen Gelenke sind in bekannter Art und Weise gestaltet und müssen möglichst reibungsfrei beweglich sein, wobei sie termisch und mechanisch eine verspannungsfreie Lagerung ermöglichen sollen.

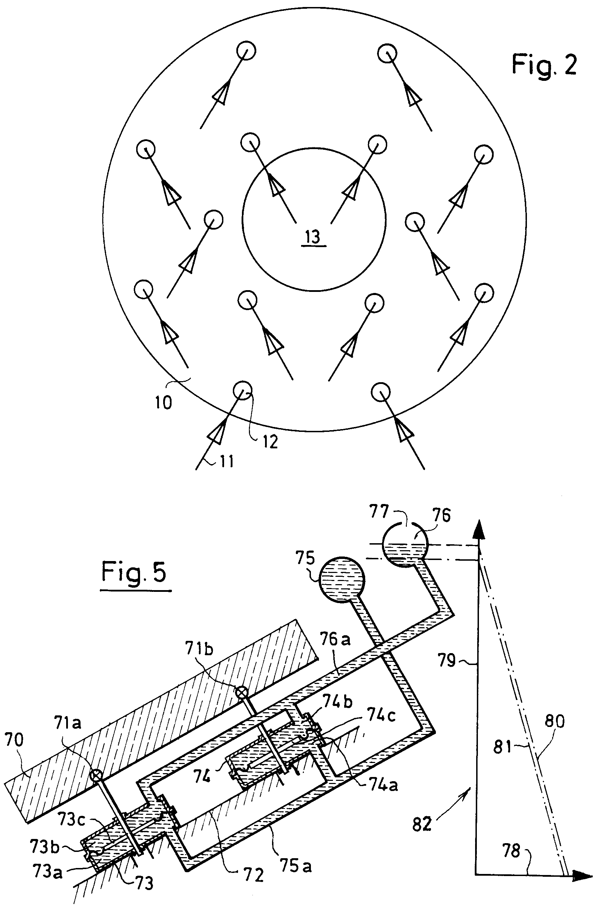

An den Unterstützungspunkten (2) befinden sich sowohl die hydraulischen Elemente (6) für das axiale als auch für das laterale Unterstützungssystem (wird zu Figur 2 näher erläutert).

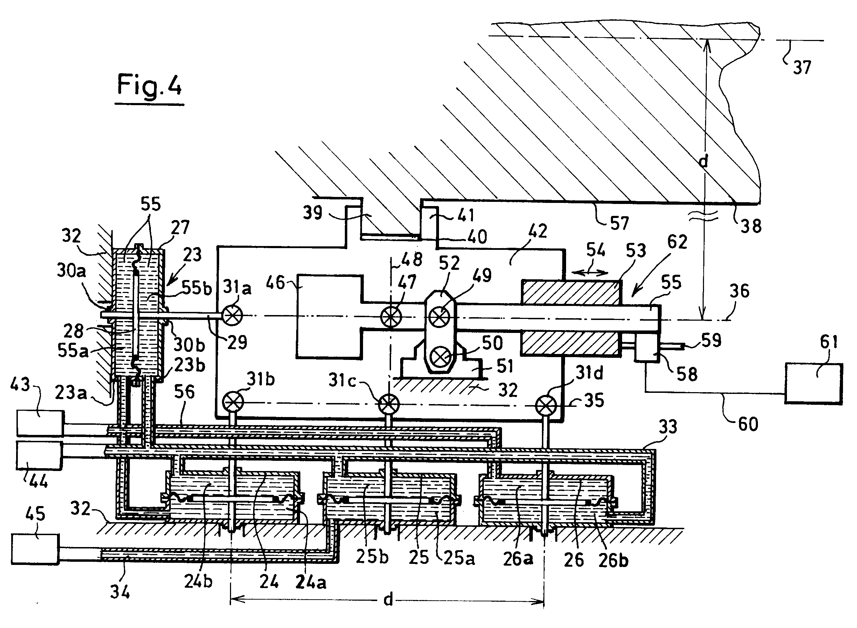

Die schematische Darstellung unterhalb eines Unterstützungspunktes (2) an der Spiegelrückseite (9) ist in Figur 4 dargestellt.

Die einzelnen hydraulischen Elemente (6) des axialen Unterstützungssystems sind in ihrer Gruppe miteinander über Flüssigkeitsleitungen (3) verbunden. Diese Flüssigkeitsleitungen (3) zwischen den einzelnen Unterstützungspunkten (2) einer Gruppe vereinigen sich zu drei Hauptflüssigkeitsleitungen (4a, b, c).

Die Hauptflüssigkeitsleitungen (4a, b, c) führen zu drei axialen Unterstützungsvolumen (A, B, C), an welchen über Schrauben (A1, B1, C1) das Volumen der drei Flüssigkeitskreise verändert werden kann. Durch die Einstellung der drei Schrauben (A1, B1, C1) hat man die Möglichkeit, die axiale Position des Spiegels (1) und seine Neigung in Relation zum Auflagekörper (7) festzulegen. An der Zentralbohrung (5) des Spiegels (1) greift kein Teil des Unterstützungssystems an.

Das axiale Unterstützungssystem hat einheitliche hydraulische Elemente (die genaue Beschreibung, wie diese Elemente gestaltet sein müssen, ist in Figur 4 näher erläutert). Dies ist aber nur dann möglich, wenn das Unterstützungsraster in der vorher beschriebenen Form so optimiert wurde, daß die Kräfte an jedem Punkt denselben Betrag haben. Dann kann man die Anzahl der Punkte in drei möglichst gleichmäßig große Gruppen aufteilen. Durch die beschriebene Kopplung der einzelnen Elemente einer Gruppe miteinander erhält man die gewünschte statische Bestimmtheit einer Dreipunktlagerung.

Das hier beschriebene axiale Unterstützungssystem ist selbst ausbalancierend hinsichtlich des Spiegelgewichts und kann für jeden Stellungswinkel des Teleskops benutzt werden.

Das in Figur 2 schematisch dargestellte seitliche (laterale) Unterstützungssystem greift an jedem Unterstützungspunkt des axialen Unterstützungsrasters auf der Spiegelrückseite an. Aus übersichtsgründen wurde die Anzahl der Unterstützungspunkte (12) und auch die Anzahl der Unterstützungsringe in Figur 2 stark reduziert.

Das Verteilungsmuster für das seitliche Unterstützungssystem ist gleich dem axialen Muster. Die Anzahl der Unterstützungspunkte (12) ist unterteilt in zwei Gruppen gleicher Anzahl, wobei die Unterstützungspunkte (12) jeweils einen hydraulischen Kreis bilden. Die einzelnen Elemente des Unterstützungssystems werden später näher erläutert.

Alle an den Unterstützungspunkten (12) angreifenden Elemente (siehe Figur 4) einer Gruppe des seitlichen Unterstützungssystems sind in derselben Richtung orientiert und haben einen Winkel von ± 20° zur optischen Achse. Die Orientierung der hydraulischen Elemente zueinander ist durch die Pfeile (11) angezeigt. Es wird zu Figur 4 noch einmal detailliert dazu eingegangen.

Im Prinzip ist es nicht erheblich, welches der Elemente zu welcher Gruppe gehört. Um eine gute Kompensation der Kräfte zu erhalten, und damit eine gute optische Leistung des Spiegels (10), sollte die Entfernung zwischen je zwei gegensätzlich wirkenden Elementen an den verschiedenen Unterstützungspunkten (12) so kurz wie möglich sein. Konstruktionsbedingt wird aber die Verteilung der Elemente an den Unterstützungspunkten (12) gewisse Entfernungen nicht unterschreiten können (insbesondere durch die Größe und Form der Elemente).

Die hier dargestellte, seitliche V-Lagerung kann alle seitlichen Kräfte (11) innerhalb des V-Winkels aufnehmen. Im Schwerkraftfeld schneiden sich die resultierenden aller Einzelkräfte in einem Punkt etwa in der Zentralbohrung (13) des Spiegels (10). Dieser Punkt wird vom Lagersystem ortsfest gehalten.

Das seitliche Unterstützungssystem legt zwei weitere Bewegungsfreiheitsgrade des Spiegels (10) fest und verankert diesen auf der durch die drei Punkte des axialen Befestigungssystems (wie in Figur 1 beschrieben) definierten Fläche.

Dieses Spiegelunterstützungssystem aus axialem und lateralem Unterstützungssystem ist in den meisten Anwendungsfällen ausreichend. Der einzige verbleibende Freiheitsgrad für die Spiegelbewegung ist die Rotation um die optische Achse.

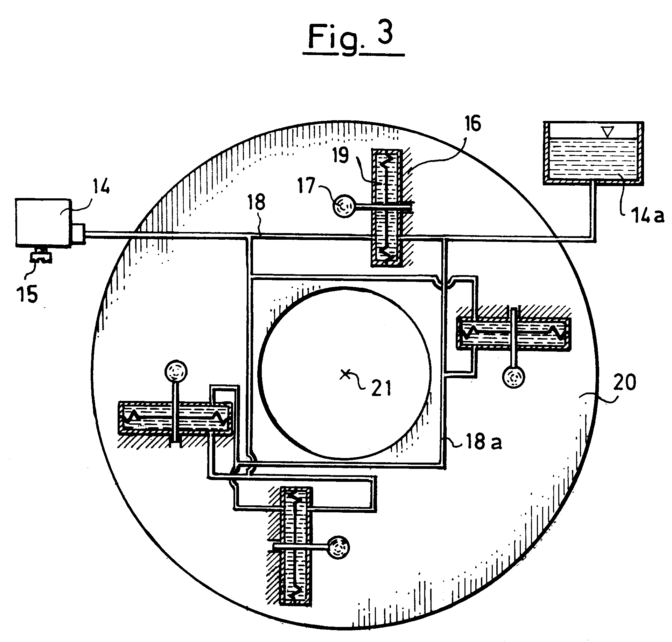

In Figur 3 ist eine Drehsicherung (Drehblockiersystem) gezeigt, welches eine Rotation des Spiegels (20) um seine optische Achse (21) verhindert. Das einzige Konstruktionsziel dieser Drehsicherung ist es, die Rotation des Spiegels (20) zu verhindern. Alle anderen Bewegungen sollen durch die Drehsicherungen nicht behindert werden und völlig frei von der Drehsicherung erfolgen können. Damit kann man mit dieser Drehsicherung zusammen mit dem axialen und lateralen Unterstützungssystem alle 6 Freiheitsgrade des Spiegels (20) festlegen.

Die Drehsicherung besteht aus vier hydraulischen Elementen (19), welche über Flüssigkeitsleitungen (18, 18a) miteinander zu einem Kreis verbunden sind. Die hydraulischen Elemente (19) können an ausgesuchten Unterstützungspunkten des axialen Unterstützungssystems angreifen.

Der durch die Flüssigkeitsleitungen (18) verbundene Kreis besitzt außerdem einen Tank (14) mit einstellbarem Volumen. Da die Elemente (19) paarweise in entgegengesetzter Richtung orientiert sind, kann sich der Spiegel (20) in jeder seitlichen Richtung frei bewegen. Dagegen ist eine Rotation des Spiegels (20) nur dann möglich, wenn das feste, hydraulische Volumen (14) geändert wird. Dies kann, wie in der Figur 3 dargestellt, z.B. durch eine Schraube (15) erfolgen. Die kontrollierte und gewollte Rotation kann für die Feinjustage des Spiegels (20) verwendet werden. Alle Kammern des Kreises (18a) dienen der Vermeidung des hydrostatischen Druckunterschiedes auf die Kammern des Kreises (18). Der Kreis (18a) ist am gemeinsamen Tank (76) in Fig. 5 mit angeschlossen.

Die einzelnen Elemente (19) sind auf ihrer Rückseite mit dem tragenden Auflagekörper (16) verbunden. Auf der Vorderseite der Elemente (19) befindet sich ein Gelenk (17) zur Befestigung des Spiegels (20). Die Elemente (19) der Drehsicherung sind funktionell mit den Elementen an den Unterstützungspunkten (12) in Figur 2 des seitlichen Unterstützungssystems, sowie mit den Elementen an den Unterstützungspunkten des axialen Unterstützungssystems identisch.

In Figur 4 ist gezeigt, wie die Elemente (23, 24, 25, 26) des axialen und lateralen Unterstützungssystems an einem Unterstützungspunkt angreifen. Die funktionale Wirkung der einzelnen hydraulischen Elemente (23, 24, 25, 26) ist aber identisch und wird im folgenden an einem Element (23) näher erläutert.

Im Prinzip ist das hydraulische Element (23) ein einfacher metallischer Balg (oder alternativ Aushöhlung). Deshalb besitzt das Element (23) ein Gehäuse, welches aus zwei diskreten, festverbundenen Gehäuseschalen (23a, b) besteht. Im Prinzip würde eine Gehäuseschale (23a) für die Betreibung der hydraulischen Elemente ausreichend. Um aber eine Kompensation des hydrostatischen Druckes und der durch ihn hervorgerufenen Fehlereffekte (Beschreibung erfolgt anhand Figur 5) durchführen zu können, besitzt das Gehäuse auch eine zweite Gehäuseschale (23b). Beide Gehäuseschalen (23a, b) haben eine genügend große Materialdicke, so daß weder äußere noch innere Druckschwankungen zu einer Veränderung des hydrostatischen Volumens führen.

In beiden Gehäuseschalen (23a, b) befindet sich je eine Öffnung (30a, b), in welcher sich ein Stab (29) frei bewegen kann. Dieser Stab (29) ist fest verbunden mit einem Kolben (28), welcher sich ungefähr auf der Verbindungslinie der beiden fest miteinander verbundenen Gehäuseschalen (23a, b) befindet. Der Kolben (28) ist über eine Membran (27) an allen Seiten mit den Gehäuseschalen (23a, b) verbunden.

In den beiden entstehenden Hohlräumen (55) befindet sich eine weitgehend gaslose Flüssigkeit. Ein Gehäuseteil (23a) ist fest mit dem Auflagekörper (32) verbunden. Der Auflagekörper (32) ist unterhalb des Stabes (29) so gestaltet, daß sich der Stab (29) in Richtung auf den Auflagekörper (32) frei bewegen kann.

Beide Hohlräume (55) in den beiden Gehäuseschalen (23a, b) sind über Flüssigkeitsleitungen (33, 56) mit Hohlräumen anderer hydraulischer Elemente an anderen Unterstützungspunkten (siehe hierzu die Beschreibung zu den Figuren 1-3) als auch mit den geschlossenen Vorratsbehältern (43, 45) verbunden, wogegen (44) offen ist und damit zusätzlich Luftdruckschwankungen ausgleicht.

An einem Ende der Stange (29) eines jeden Elementes (23, 24, 25, 26) befindet sich ein Gelenk (31a-d), welches eine möglichst reibungsfreie Verbindung zwischen dem hydraulischen Element (23, 24, 25, 26) und einem Zwischenkörper (42) ermöglicht. Der Zwischenkörper (42) seinerseits hat eine lösbare, starre Verbindung mit dem Spiegel (38). Dazu ragt am Unterstützungspunkt eine Noppe (39) auf der Rückseite (57) des Spiegels (38) in eine Muffe (41) an der Oberseite des Zwischenkörpers (42) hinein und wird dort klemmend gehalten. Es verbleibt zwischen der Unterseite der Noppe (39) und dem inneren Ende der Muffe (41) noch ein Luftspalt (40), damit bei einer eventuellen termischen Ausdehnung des metallischen Zwischenkörpers (42) keine Spannungen auf den Spiegel (38) aus Zerodur übertragen werden. Die radiale Klemmung ist ebenfalls temperaturkompensierend ausgeführt.

Wenngleich der funktionelle Aufbau der einzelnen hydraulischen Elemente (23, 24, 25, 26) identisch ist, so haben sie doch eine unterschiedliche Funktion.

Ein hydraulisches Element (25) gehört zu dem axialen Unterstützungssystem. Es ist mit seinem Gelenk (31c) exakt unterhalb der Noppe (39) auf deren Mittelsenkrechten (48) angebracht. Der zum unteren Hohlraum (25a) gehörende Gehäuseteil des hydraulischen Elementes (25) ist fest mit dem Auflagekörper (32) verbunden. über eine Flüssigkeitsleitung (34) ist dieser mit Flüssigkeit gefüllte Hohlraum (25a) mit den anderen, zu seiner Gruppe (siehe Beschreibung zu Figur 1a/b) gehörenden hydraulischen Elementen sowie mit dem Vorratsbehälter (45) des axialen Systems verbunden. Der obere, mit Flüssigkeit gefüllte Hohlraum (25a, b) des hydraulsichen Elementes (25) ist mit dem Vorratsbehälter (44) der hydrostatischen Druckkompensation verbunden.

Die hydraulischen Elemente (23, 24, 26) haben unterschiedliche Aufgaben. Das eine hydraulische Element (23) gehört zu einem der beiden hydraulischen Kreise des lateralen Unterstützungssystems. In jedem der beiden Kreise sind die entsprechenden Hohlräume (55a) untereinander über Flüssigkeitsleitungen (33) miteinander verbunden (siehe auch Beschreibung zu Figur 2). Die Richtung der Elemente (23) am Zwischenkörper (42) ist durch Kraftpfeile (11) in Fig. 2 ersichtlich.

Die beiden anderen hydraulischen Elemente (24, 26) des lateralen Unterstützungssystems an diesem Unterstützungspunkt sind an ihrer Rückseite an dem Auflagekörper (32) befestigt und dienen der Kompensation vom Momenten, welche durch die Lagerung des hydraulischen Elementes (23) außerhalb des Gravitationszentrums eines zu dem Unterstützungspunkt gehörenden Teil des Spiegels (38) durch die Lateralkraft in Dose (23) auftreten.

Mit der hier angewendeten hydraulischen Methode ist eine Kompensation der seitlichen (lateralen) Momente direkt an der Stelle möglich, wo diese erzeugt werden.

Die seitlichen Momente würden sich nur dann vermeiden lassen, wenn man zumindest das laterale Unterstützungssystem direkt in den Gravitationszentren des Spiegels (38) befestigen würde. Die Lage der Gravitationszentren-Verbindungslinie (-ebene) (37) liegt aber fast genau in der Mitte des Spiegels (38). Die Befestigung des Spiegels an ein Unterstützungssystem in den Gravitationszentren (COG) kann man deshalb nur bei relativ dicken Spiegeln realisieren. Dazu sind große und tiefe Löcher in die Rückseite des Spiegels notwendig, wobei die Tiefe dieser Löcher mehr als die halbe Spiegeldicke betragen muß. Dies ist bei dünnen Spiegeln (38) mit sowieso schon verringerter Stabilität nicht günstig.

Wenn aber die Befestigung nicht in den Gravitationszentren erfolgt, erzeugt die seitliche Befestigung des lateralen Unterstützungssystems ohne Kompensation an der Spiegelrückseite (57) Momente, die die optische Qualität des Spiegels (38) bei der Benutzung stark verschlechtern.

Bei der in Figur 4 gezeigten hydraulischen Kompensation der Momente wird das Moment von dem hydraulischen Druck des einen Hohlraumes (55a) des hydraulischen Elementes (23) des seitlichen Unterstützungssystems auf zwei weitere hydraulische Elemente (24, 26) übertragen, deren Hohlräume (24a, 26a) durch die Flüssigkeitsleitung (56) mit dem Hohlraum (23a) des hydraulischen Elementes (23) verbunden sind. Die beiden hydraulischen Elemente (24, 26) arbeiten dabei in entgegengesetzter Richtung. Die Entfernung (d) der beiden zusätzlichen hydraulischen Elemente (24, 26) zueinander ist so bemessen, daß ihre Entfernung (d) mit der Entfernung (d) des Gravitationszentrums von der Wirkungslinie des hydraulischen Elementes (23) des lateralen Unterstützungssystems übereinstimmt. Alle anderen Hohlräume (55b, 24b, 26b) der zum lateralen Unterstützungssystem gehörenden hydraulischen Elemente (23, 24, 26) sind über Flüssigkeitsleitungen (33) sowohl miteinander als auch mit dem Vorratsbehälter (44) für die Kompensation des hydrostatischen Druckes verbunden. Die Befestigungen der Gelenke (31b, 31d) der hydraulischen Elemente (24, 26) für die Kompensation des lateralen Drucks erfolgt in einer Linie (35) mit dem Gelenk (31c) des hydraulischen Elementes (25) für das axiale Unterstützungssystem parallel zur Wirkungslinie (37) einer reinen Lateralkraft.

Außer den drei vorab beschriebenen Systemen (axiales und laterales Unterstützungssystem, (System zur Kompensation der lateralen Momente) befindet sich an dem hier dargestellten Unterstützungspunkt des Spiegels (38) noch eine Vorrichtung (62) für ein aktives Oberflächenkontrollsystem. Dieses System dient dem Ausgleich zeitunabhängiger Oberflächenfehler des Spiegels (38). Eine Vorrichtung (62) dieses Systems ist an jedem Unterstützungspunkt für den Spiegel (38) vorhanden. Die Vorrichtung (62) besteht aus einem Hebel (55), der über ein Gelenk (49) an einem Zwischenstück (52) befestigt ist. Das Zwischenstück (52) seinerseits ist über ein weiteres Gelenk (50) an einem Grundkörper (51) befestigt, wobei der Grundkörper (51) an seiner Unterseite fest mit dem Auflagekörper (32) verbunden ist.

An dem Hebel (55) befindet sich an einem Ende ein starrer Gewichtskörper (46) und an seinem anderen Ende ein beweglicher Gewichtskörper (53), der in Pfeilrichtung (54) durch eine Achse (59) an einem Gleichstrommotor (58) bewegt werden kann. Der Motor (58) erhält seine Laufbefehle über eine Leitung (60) von einer Steuerung (61).

Das System aus Gewichten am Hebel kann noch durch ein nicht dargestelltes Federsystem nach bekanntem Stand der Technik ergänzt werden, das zwischen dem Hebel (55) und dem Fixpunkt (32) wirkt. Über ein reibungsarmes Gelenk (47) ist der Hebel (55) an dem Zwischenkörper (42) am Schnittpunkt der Verbindungslinie (48) - Gelenk (31c) des hydraulischen Elementes (25) für das axiale Unterstützungssystem und Gravitationszentrum des Teils des Spiegels (38) des Unterstützungspunktes - mit der Wirkungslinie (36) des hydraulischen Elementes (23) des lateralen Unterstützungssystems verbunden.

Die Kompensation des hydrostatischen Drucks ist in Figur 5 dargestellt. Eine derartige Kompensation ist nicht notwendig, wenn sich der Spiegel (70) immer in einer horizontalen Position befindet. Wenn aber der Spiegel (70) seine horizontale Position verläßt, sind mit ihm über Gelenke (71a, b) verbundene gegenüberliegende hydraulische Elemente (73, 74), befestigt am Auflagekörper (72), auf unterschiedliche Höhe in der Gravitationsrichtung. Da aber die hydraulische Flüssigkeit nicht gewichtslos ist, ergibt sich eine Druckdifferenz in den hydraulischen Leitungen (75a) und damit auch in den flüssigkeitsgefüllten Hohlräumen (73a, 74a) der hydraulischen Elemente (73, 74). Diese Druckdifferenz reicht bei dünnen Spiegeln (70) aus, diese zu deformieren.

Zur Verhinderung der hydrostatischen Druckdifferenzen besitzen die hydraulischen Elemente (73, 74) einen zweiten flüssigkeitsgefüllten Hohlraum (73b, 74b), so daß die hydraulische Druckdifferenz zu beiden Seiten des Kolbens (73c, 74c) mit Membrane wirkt und sich die hydrostatischen Druckdifferenzen somit wirkungsmäßig aufheben. Die Hohlräume (73b, 74b) zur Eliminierung der hydrostatischen Druckdifferenz sind durch eine Leitung (76a) miteinander verbunden. Die Leitung (76a) führt außerdem zu einem Vorratsbehälter (76) mit einer Öffnung (77). Dieser Vorratsbehälter (76) ist so relativ zum Vorratsbehälter (75), angeschlossen an die hydraulischen Leitungen (75a), angebracht, daß sein hydraulischens Volumen sich oberhalb des Höhenniveaus jedes einzelnen hydraulischen Elementes (73, 74) und des dazugehörigen Vorratsbehälters (75) befindet. Diese Kompensationsmethode muß an allen hydraulischen Elementen (73, 74) angewendet werden, wenn man eine Beeinflussung der Funktionen der hydraulischen Elemente durch den hydraulischen Druck ausschließen will.

Im Diagramm (82) sind die druckmäßigen Auswirkungen des hydrostatischen Effektes noch einmal verdeutlicht. Aus dem Diagramm (82) sind die Drücke (80) in den Hohlräumen (73a, 74a) für das Unterstützungssystem sowie die Drücke (81) in den Hohlräumen (73b, 74b) für die Druckkompensation bezogen auf die Flüssigkeitshöhe (79) und dem statischen Druck (78) ersichtlich.

**Patentansprüche**

1. Spiegellagerung für den Primärspiegel eines Teleskops mit einer Dreipunktlagerung durch ein axiales Unterstützungssystem an Unterstützungspunkten in einem Raster an der Spiegelrückseite, dadurch gekennzeichnet, daß an Unterstützungspunkten (12) auf der Spiegelrückseite (9, 57) die Elemente (6, 23, 24, 26) eines lateralen Unterstützungssystems vorhanden sind, wodurch das laterale Unterstützungssystem seitlich angreifende Kräfte (11) auf mehrere Unterstützungspunkte (12) an der Spiegelrückseite (9, 57) verteilt.

2. Spiegellagerung nach Anspruch 1, dadurch gekennzeichnet, daß das laterale Unterstützungssystem aus in zwei Gruppen aufgeteilten Elementen (23) besteht, wobei die Elemente (23) beider Gruppen in einem Winkel zueinander ausgerichtet sind (V-Lagerung), wodurch laterale Kräfte (11) innerhalb eines V-Winkels aufgenommen werden können.

3. Spiegellagerung nach einem der Ansprüche 1 oder 2, dadurch gekennzeichnet, daß die Unterstützungspunkte (2, 12) des axialen und des lateralen Unterstützungssystem übereinstimmend sind.

4. Spiegellagerung nach einem der Ansprüche 1 bis 3, dadurch gekennzeichnet, daß an jedem Unterstützungspunkt (2, 12) Elemente (24, 26) zur Kompensation von lateralen Momenten vorhanden sind.

5. Spiegellagerung nach einem der Ansprüche 1-4, dadurch gekennzeichnet, daß eine Drehsicherung vorhanden ist, welche die Drehung des Spiegels (1, 10, 20, 38, 70) um seine optische Achse verhindert.

6. Spiegellagerung nach Anspruch 5, dadurch gekennzeichnet, daß die Drehsicherung aus mehreren Elementen (19) besteht, welche auf mehrere Unterstützungspunkte (2, 12) verteilt sind.

7. Spiegellagerung nach einem der Ansprüche 1-6, dadurch gekennzeichnet, daß die Elemente (6, 19, 23, 24, 25, 26) hydraulische Elemente sind.

8. Spiegellagerung nach einem der Ansprüche 1-7, dadurch gekennzeichnet, daß die Elemente (6, 23, 24, 25, 26) an ein Kompensationssystem zur Kompensation des hydrostatischen Effektes angeschlossen sind.

9. Spiegellagerung nach einem der Ansprüche 1-8, dadurch gekennzeichnet, daß an jedem Unterstützungspunkt eine Vorrichtung (62) zur aktiven Steuerung der Spiegelform vorhanden ist.

# Fig.1a

# Fig.1b

Fig. 2

Fig. 5

# Fig. 3

Fig.4

EP 0 466 003 A2

12